# EUROPEAN PATENT APPLICATION

(11) **EP 2 284 785 A1**
(43) Date of publication of application: **16.02.2011**
(21) Application number: 10153846.0
(22) Date of filing: 17.02.2010
(51) Int. Cl.: G06Q 30/00

(54) **Sponsor-based advertising apparatus and method using extracted affect**

(30) Priority: 10.08.2009 KR 20090073261
(71) Applicant: Samsung Electronics Co., Ltd, Gyeonggi-Do 443-742 (KR)
(72) Inventor: Min, Wook Hee, Gyeonggi-do 446-712 (KR); Kang, Bo Gyeong, Gyeonggi-do 446-712 (KR)
(74) Representative: D'Halleweyn, Nele Veerle Trees Gertrudis

(57) **Abstract**

A sponsor-based advertising apparatus and method using an extracted affect is provided. The advertising apparatus may extract an affect from received data, and select an advertisement to be inserted based on the affect of the received data and whether a sponsor corresponding to a keyword. The advertising apparatus may select an advertisement based on location information as well as the affect and the sponsor.

## Description

### BACKGROUND

### 1. Field

The following description relates to an advertising apparatus and method that may extract an affect from a text and provide a sponsor advertisement based upon the extracted affect.

### 2. Description of the Related Art

Attracting the interest of potential customers using an advertisement through mass media may be limited due to the one-way flow of mass media from advertiser to potential customers. Also, a customer may feel uncomfortable with incessant advertisements on mass media. An undesired advertisement may give a potential customer a bad image of a product or a service.

A variety of technologies interactively providing information to customers have been developed. Such technologies may include, for example, a computer online service, an interactive television system, a text service, and the like.

An online advertisement market has been developed through a keyword advertisement or a text advertisement. A keyword advertisement or a text advertisement may be similar to a newspaper advertisement placed on a page including a related article. For example, a keyword advertisement or a text advertisement may provide an advertisement, which is highly associated with corresponding contents, through an online computer service, and enable a user to click on the advertisement.

In a keyword advertisement or a text advertisement in a conventional art, however, contents may be mechanically mapped to an advertisement or not mapped at all. Thus, an advertisement that a user is not interested in, may be displayed.

### SUMMARY

In one general aspect, there is provided an advertising apparatus, comprising a keyword extraction unit to extract a keyword from received data, an affect extraction unit to extract an affect from the received data, an advertisement selection unit to select an advertisement to be inserted based on the affect of the received data and whether a sponsor corresponding to the keyword exists, and an interface unit to output the advertisement to a user.

The affect extraction unit may extract a positive affect, a negative affect, or a neutral affect from the content of the received data.

The advertising apparatus may further comprise a script generation unit to insert the selected advertisement in the received data and to generate a script based on the advertisement and the received data, and a script analysis unit to analyze the generated script.

The advertising apparatus may further comprise a location extraction unit to extract at least one of a location of a transmitter of the received data, a location of the advertising apparatus, and a location included in content of the received data, wherein the advertisement selection unit selects the advertisement to be inserted from an advertisement node database based on the at least one location, the affect of the received data, and whether the sponsor corresponding to the keyword exists.

The advertising apparatus may further comprise an advertisement node database storing one or more advertisement nodes, each advertisement node including at least one of a trade name, node identification information, upper node information indicating a node in a upper layer of the advertisement node, lower node information indicating a node in a lower layer of the advertisement node, keyword information used to sort an advertisement object, and sponsor information indicating whether an advertisement is requested, wherein the advertisement selection unit searches the advertisement node database and selects the advertisement to be inserted.

The advertisement node may include at least one of reverse node information indicating a node which is different in concept from the advertisement node, location information indicating a location of the advertisement object, user preference information indicating a user's preference for the advertisement object, new product information of the advertisement object, coupon information of the advertisement object, and advertisement animation information of the advertisement object.

When the affect is a positive affect or a neutral affect, and a sponsor of an advertisement node corresponding to the keyword exists, the advertisement selection unit may select an advertisement of the sponsor corresponding to the keyword as the advertisement to be inserted.

When the affect is a positive affect or a neutral affect, a sponsor of an advertisement node corresponding to the keyword does not exist, and a sponsor from the same line of business of the advertisement node exists, the advertisement selection unit may select an advertisement of the sponsor from the same line of business as the advertisement to be inserted.

When the affect is a positive affect or a neutral affect, a sponsor of an advertisement node corresponding to the keyword does not exist, and a sponsor from the same line of business of the advertisement node does not exist, the advertisement selection unit may select an advertisement of a sponsor from a different line of business as the advertisement to be inserted.

When the affect is a negative affect, an advertisement node corresponding to the keyword is a lowest node, and a sponsor from the same line of business of the advertisement node exists, the advertisement selection unit may select an advertisement of the sponsor from the same line of business as the advertisement to be inserted.

When the affect is a negative affect, an advertisement node corresponding to the keyword is a lowest node, and a sponsor from the same line of business of the advertisement node does not exist, the advertisement selection unit may select an advertisement of a sponsor from a different line of business or an advertisement of a sponsor of a business associated with a reverse node of the advertisement node, as the advertisement to be inserted.

When the affect is a negative affect, and an advertisement node corresponding to the keyword is different from a lowest node, the advertisement selection unit may select an advertisement of a sponsor in a different line of business or an advertisement of a sponsor of a business associated with a reverse node of the advertisement node, as the advertisement to be inserted.

In another aspect, there is provided an advertising method, comprising extracting a keyword from received data, extracting an affect from the received data, selecting an advertisement to be inserted based on the affect of the received data and whether a sponsor corresponding to the keyword exists, and outputting the advertisement and the received data to a user.

The extracting of the affect may extract a positive affect, a negative affect, or a neutral affect based on content of the received data.

The advertising method may further comprise inserting the selected advertisement in the received data and generating a script based on the received data and the advertisement, and analyzing and replaying the generated script.

The advertising method may further comprise extracting at least one of a location of a transmitter of the received data, a location of an advertising apparatus, and a location included in content of the received data, wherein the selecting selects the advertisement to be inserted from an advertisement node database based on the at least one location, the affect of the received data, and whether the sponsor corresponding to the keyword exists.

The selecting may search an advertisement node database to select the advertisement to be inserted, the advertisement node database may include one or more advertisement nodes that each include at least one of a trade name, node identification information, upper node information indicating a node in a upper layer of the advertisement node, lower node information indicating a node in a lower layer of the advertisement node, keyword information used to sort advertisement object, and sponsor information indicating whether an advertisement is requested.

The advertisement node may include at least one of reverse node information indicating a node which is different in concept from the advertisement node, location information indicating a location of the advertisement object, user preference information indicating a user's preference for the advertisement object, new product information of the advertisement object, coupon information of the advertisement object, and advertisement animation information of the advertisement object.

When the affect is a positive affect or a neutral affect, and a sponsor of an advertisement node corresponding to the keyword exists, the selecting may select an advertisement of a sponsor corresponding to the keyword as the advertisement to be inserted.

When the affect is a positive affect or a neutral affect, a sponsor of an advertisement node corresponding to the keyword does not exist, and a sponsor from the same line of business of the advertisement node exists, the selecting may select an advertisement of the sponsor from the same line of business as the advertisement to be inserted.

When the affect is a positive affect or a neutral affect, a sponsor of an advertisement node corresponding to the keyword does not exist, and a sponsor from the same line of business of the advertisement node does not exist, the selecting may select an advertisement of a sponsor from a different line of business as the advertisement to be inserted.

When the affect is a negative affect, an advertisement node corresponding to the keyword is a lowest node, and a sponsor from the same line of business of the advertisement node exists, the selecting may select an advertisement of the sponsor from the same line of business as the advertisement to be inserted.

When the affect is a negative affect, an advertisement node corresponding to the keyword is a lowest node, and a sponsor from the same line of business of the advertisement node does not exist, the selecting may select an advertisement of a sponsor from a different line of business or an advertisement of a sponsor of a business associated with a reverse node of the advertisement node, as the advertisement to be inserted.

When the affect is a negative affect, and an advertisement node corresponding to the keyword is different from a lowest node, the selecting may select an advertisement of a sponsor from a different line of business or an advertisement of a sponsor of a business associated with a reverse node of the advertisement node, as the advertisement to be inserted.

Other features and aspects will be apparent from the following detailed description, the drawings, and the claims.

### BRIEF DESCRIPTION OF THE DRAWINGS

FIG 1 is a diagram illustrating an example of a sponsor-based advertising apparatus using an extracted affect.
FIG. 2 is a flowchart illustrating an example of a method for providing a sponsor-based advertisement using an extracted affect.
FIG. 3 is a flowchart illustrating an example of a method for selecting an advertisement to be provided.
FIG. 4 is a diagram illustrating an example of a hierarchical structure of advertisement nodes.
FIG. 5 is a diagram illustrating an example of a data structure of an advertisement node.
FIG. 6 is a diagram illustrating an example of animation scripts before and after an advertisement is inserted.
FIG. 7 is a diagram illustrating an example of a display that is displaying a text message and a sponsor-based advertisement and an example of a coupon as an event of an advertisement.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

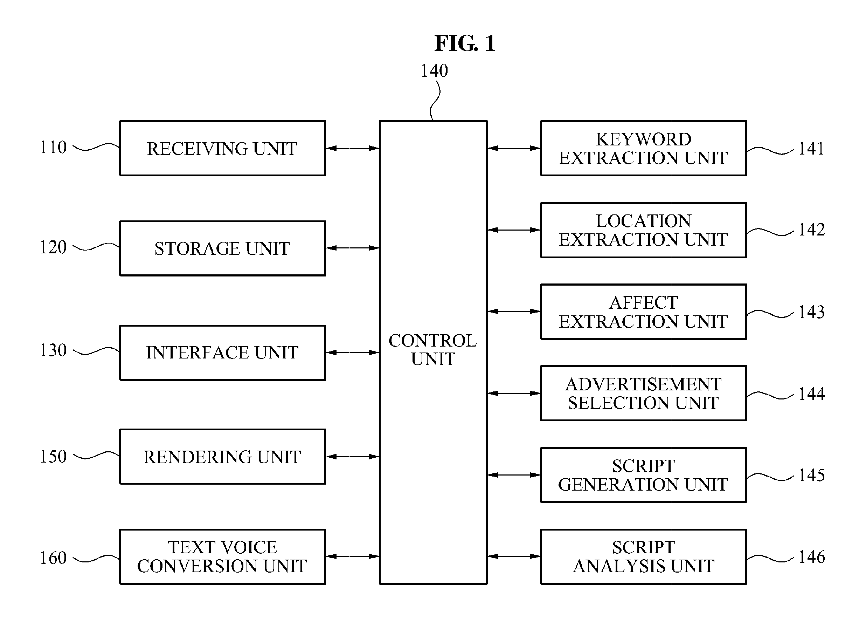

FIG. 1 illustrates an example of a sponsor-based advertising apparatus using an extracted affect.

Referring to FIG. 1, the sponsor-based advertising apparatus using an extracted affect, hereinafter, referred to as an advertising apparatus, may include a receiving unit 110, a storage unit 120, an interface unit 130, a control unit 140, a keyword extraction unit 141, a location extraction unit 142, an affect extraction unit 143, an advertisement selection unit 144, a script generation unit 145, a script analysis unit 146, a rendering unit 150, and a text voice conversion unit 160.

The receiving unit 110 may receive data. For example, the received data may be a text, an animation script, web text, and the like.

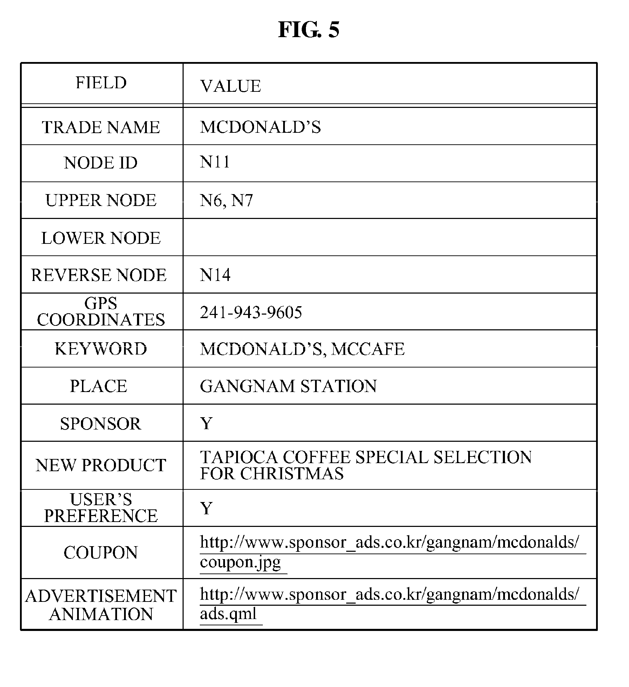

The storage unit 120 may store an affect extraction database and an advertisement node database. For example, the affect extraction database may include one or more positive affects, one or more negative affects, and/or one or more neutral affects. The affects may be based on one or more sentences included in the received data. The advertisement node database may store one or more advertisement nodes. The advertisement nodes may be stored in a hierarchical structure. An example structure of the advertisement nodes stored in the advertisement node database is described in detail with reference to FIG. 5.

The interface unit 130 may provide a user with an interface. That is, the interface unit 130 may receive a user's input and provide a corresponding output to the user. The interface may include, for example, a display, a touch screen, a keypad, a microphone, and the like.

The keyword extraction unit 141 may search for a keyword in the advertisement node database. The keyword extraction unit 141 may determine whether a keyword received from data is stored in the advertisement node database.

The location extraction unit 142 may extract location information. For example, the extracted location may be at least one of a location of a transmitter of the received data, a location of the advertising apparatus, a location included in content of the received data, and the like. The location of the transmitter may be included in the received data. In some embodiments, the location of the advertising apparatus may be measured using a Global Positioning System (GPS) receiver.

The affect extraction unit 143 may extract an affect of the received data by analyzing content of the received data. The affect extraction unit may compare the content of the received data with affect information stored in the affect extraction database. Affects extracted by the affect extraction unit 143 may be divided into one or more different affect types, for example, two affect types, three affect types, six affect types, ten affect types, or other desired amount of affect types. As an example, three affect types are described herein, including a positive, negative, and neutral affects. This is not meant to limit the number of affects used, and any desired amount of affect types may be used with the advertising apparatus.

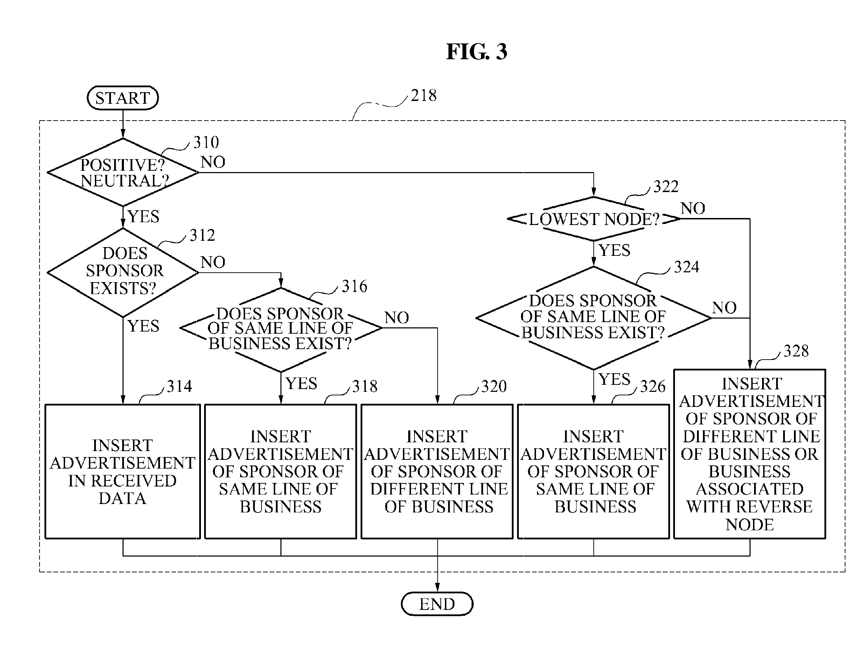

The advertisement selection unit 144 may select an advertisement to be inserted based on the affect of the received data and whether a sponsor corresponding to the keyword exists. The advertisement to be inserted may be based upon a keyword, for example, an advertisement of a sponsor corresponding to a keyword, an advertisement of a sponsor in a same line of business associated with a keyword, an advertisement of a sponsor in a different line of business of a business of a keyword, an advertisement of a sponsor of a business associated with a reverse node of a keyword, and the like. The reverse node may indicate a node which is different in concept from the advertisement node. An example operation of selecting the advertisement by the advertisement selection unit 144 is described in detail with reference to FIG. 3.

The script generation unit 145 may insert the advertisement selected by the advertisement selection unit 144, in the received data, and generate a script where the advertisement is inserted. The script generation unit 145 may generate an animation script as the generated script. The script analysis unit 146 may analyze the script generated by the script generation unit 145, and transmit the analyzed script to the rendering unit 150 and the text voice conversion unit 160. The advertisement may be outputted through the interface unit 130 to a user. When the advertisement is selected and it is sensed that an advertisement event occurs, the script analysis unit 146 may execute an event included in the advertisement. For example, the event may be a coupon, an advertisement animation, a link to related sites, a product description, and the like.

The rendering unit 150 may replay the script analyzed by the script analysis unit 146. The text voice conversion unit 160 may convert a text analyzed by the script analysis unit 146, into speech, and output the speech. The script replayed through the rendering unit 150 may include an animation script.

The control unit 140 may control the operations of the advertising apparatus. For example, the control unit 140 may control the storage unit 120, the interface unit 130, the keyword extraction unit 141, the location extraction unit 142, the affect extraction unit 143, the advertisement selection unit 144, the script generation unit 145, the script analysis unit 146, the rendering unit 150, and the text voice conversion unit 160. Each of the units in FIG. 1 are described as separate components. However, in practical use one or more of the components may be combined.

In some embodiments, the control unit 140 may function as one or more of the storage unit 120, the interface unit 130, the keyword extraction unit 141, the location extraction unit 142, the affect extraction unit 143, the advertisement selection unit 144, the script generation unit 145, the script analysis unit 146, the rendering unit 150, and the text voice conversion unit 160.

The sponsor based advertising apparatus may examine received data, extract a keyword from the data, and determine an affect with respect to the keyword. For example, a user may indicate a positive affect about a keyword such as 'baseball.' The sponsor based advertising apparatus may search for an advertiser of baseball equipment, and provide an advertisement to a user, through the sponsor based advertising apparatus.

The sponsor based advertising apparatus may receive data, and extract a particular company name, or product name from the received data. For example, the sponsor based advertising apparatus may extract the keyword 'STARBUCKS COFFEE®.' The sponsor based advertising apparatus may determine a negative or positive affect with respect to the keyword from a user's speech or text. If the affect is positive, the sponsor based advertising apparatus may search the storage unit or an advertising node database and search for an advertisement of STARBUCKS COFFEE®.

A sponsor-based advertising method using an extracted affect, hereinafter referred to as an advertising method, is described.

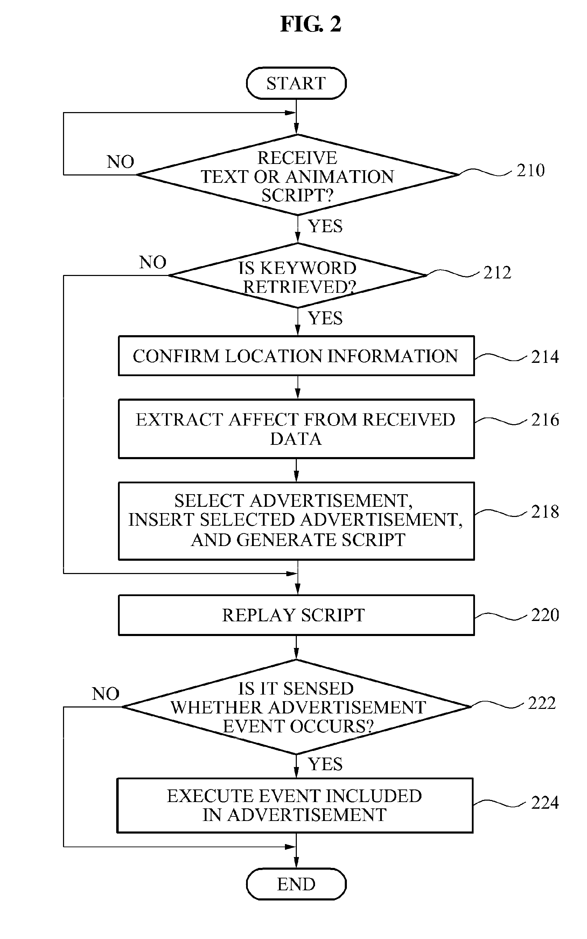

FIG. 2 illustrates an example of an advertising method.

Referring to FIG. 2, in 210, the advertising apparatus may receive data, for example, text, animation script, web text, and the like. In 212, the advertising apparatus may search whether a keyword of the received data is stored in an advertisement node database. When the keyword is not retrieved from the received data as a result of the searching in 212, the advertising apparatus may end the algorithm.

When the keyword is retrieved from the received data and is found in the advertisement node database in 212, the advertising apparatus may confirm location information in operation 214. For example, the location information may be at least one of a location of a transmitter of the received data, a location of the advertising apparatus, a location included in content of the received data, and the like. The location of the transmitter may be included in the received data. In some embodiments, the location of the advertising apparatus may be measured using a GPS receiver.

In 216, the advertising apparatus may analyze content of the received data by comparing the received data to affect information stored in an affect extraction database, and extract an affect of the received data. For example, the affect may be a positive affect, a negative affect, or a neutral affect.

In 218, the advertising apparatus may select an advertisement from the advertisement node database based on, for example, at least one of location information, the affect of the received data, and whether a sponsor corresponding to the keyword exists. The advertising apparatus may insert the advertisement in the received data, and may generate a script. For example, the advertisement to be inserted may be at least one of an advertisement of a company corresponding to the keyword, an advertisement of a sponsor in a same line of business of the keyword, an advertisement of a sponsor in a different line of business of the keyword, and an advertisement of a sponsor of a business associated with a reverse node of the keyword. An operation of selecting the advertisement is described in detail with reference to FIG. 3. In 220, the advertising apparatus may analyze the script where the advertisement is inserted, and replay the script.

In 222, the advertising apparatus may sense whether an advertisement event occurs. The advertisement event may occur when the advertisement is selected and when the script is replayed. When it is sensed that the event occurs in 222, the advertising apparatus may execute the event included in the advertisement in 224. The event may be, for example, a coupon, an advertisement animation, a link to related sites, a product description, and the like.

When no event is sensed in 222, the advertising apparatus may end the advertising method.

FIG. 3 illustrates an example of a method for selecting an advertisement to be provided. Referring to FIG. 3, in 310, the advertising apparatus may ascertain whether the affect of the received data is a positive affect or a neutral affect.

When it is ascertained in 310 that the affect of the received data is positive or neutral, the advertising apparatus may ascertain whether a sponsor of an advertisement node corresponding to a keyword in the received data exists in an advertisement node database, in 312.

When it is ascertained in 312 that the sponsor exists, the advertising apparatus may retrieve an advertisement of the sponsor corresponding to the advertisement node from the advertisement node database, and insert the advertisement into the received data in 314.

When it is ascertained in 312 that the sponsor does not exist, the advertising apparatus may ascertain whether a sponsor from the same line of business of the advertisement node exists in the advertisement node database, in 316.

When it is ascertained in 316 that a sponsor from the same line of business exists, the advertising apparatus may retrieve an advertisement of the sponsor from the same line of business from the advertisement node database, and insert the advertisement into the received data in 318. When a plurality of sponsors from the same line of business exist in the advertisement node database, an advertisement of a sponsor with a higher user preference or a higher priority may be inserted. The user preferences may be based on predetermined preferences, or preferences input by a user. The priority may be based on a predetermined priority.

When it is ascertained in 316 that a sponsor from the same line of business does not exist, the advertising apparatus may retrieve an advertisement of a sponsor from a different line of business from the advertisement node database, and insert the advertisement into the received data in 320. When a plurality of sponsors from a different line of business exist, an advertisement of a sponsor with a higher user preference or a higher priority may be inserted.

When it is ascertained in 310 that the affect of received data is negative, the advertising apparatus may ascertain whether an advertisement node corresponding to the keyword is a lowest node, from the advertisement node database in 322.

When it is ascertained in 322 that the advertisement node is the lowest node, the advertising apparatus may ascertain whether a sponsor from the same line of business of the advertisement node exists in the advertisement node database in 324.

When it is ascertained in 324 that a sponsor from the same line of business exists, the advertising apparatus may retrieve an advertisement of the sponsor in the same line of business from the advertisement node database, and insert the advertisement into the received data in 326. When a plurality of sponsors from the same line of business exist, an advertisement of a sponsor with a higher user preference or a higher priority may be inserted.

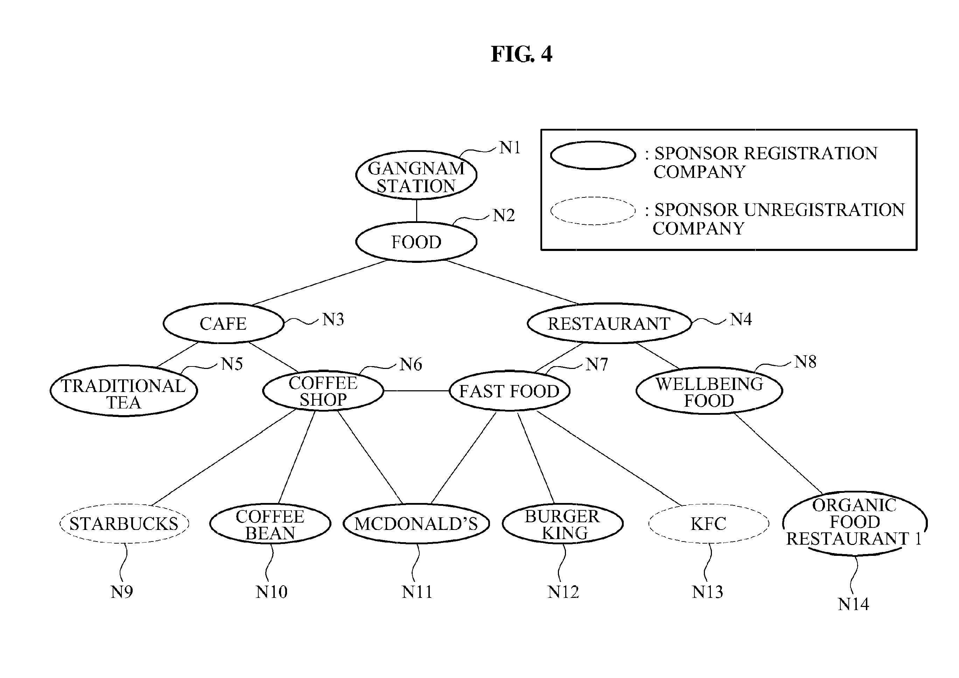

When it is ascertained in 322 that the advertisement node is not the lowest node, or when it is ascertained in 324 that a sponsor from the same line of business does not exist, in 328 the advertising apparatus may insert an advertisement of a sponsor from a different line of business or an advertisement of a sponsor of a business associated with a reverse node of the advertisement node. When a plurality of sponsors from a different line of business exist, or a plurality of the sponsors of the business associated with the reverse node exist, an advertisement of a sponsor with a higher user preference or a higher priority may be inserted. The reverse node may indicate a node which is different in concept from the advertisement node. An example of advertisement nodes defined using a hierarchical structure is described in detail with reference to FIG. 4. When a keyword is, for example, 'fast food,' a reverse node may be 'organic food.'

FIG. 4 illustrates an example of a hierarchical structure of advertisement nodes. The advertisement nodes are divided into registered sponsors and unregistered sponsors. FIG. 4 illustrates an example of a hierarchical structure of advertisement nodes sorted based on food in an area.

Referring to FIG. 4, the advertisement nodes may be divided into an advertisement node where a sponsor is registered, and an advertisement node where a sponsor is not registered. The advertisement node where a sponsor is registered is represented by a solid line, and the advertisement node where a sponsor is not registered is represented by a dotted line. Also, the advertisement nodes may be structured with a plurality of levels.

The advertisement nodes, excluding the lowest nodes, may include at least one advertisement node of a lower level. For example, an advertisement node 'fast food' N7 may include an advertisement node 'MCDONALD'S® N11, an advertisement node BURGER KING® N12, and an advertisement node KFC® N13.

The advertisement nodes, excluding the highest nodes, may be included in at least one advertisement node of upper level. For example, the advertisement node MCDONALD'S® N11 may be included in the advertisement node 'fast food' N7 and an advertisement node 'coffee shop' N6.

An advertisement node of a sponsor from the same line of business, from a different line of business, and from a line of business associated with a reverse node, are described in detail with reference to FIG. 4.

The reverse node may indicate a node which is different in concept from an advertisement node. The concept may be based upon a keyword. For example, a reverse node of the advertisement node MCDONALD'S® N11, the advertisement node BURGER KING® N12, and the advertisement node KFC® N13 may be an advertisement node 'Organic food restaurant 1' N14. In this example, the concept of MCDONALDS®, BURGER KING®, AND KFC® may be determined to be fast food. The concept of organic food is different in concept from fast food.

When an advertisement node corresponding to a keyword is a lowest node, the advertisement node of the sponsor from the same line of business may indicate an advertisement node where a sponsor is registered from among sibling nodes. For example, an advertisement node of a sponsor from the same line of business of an advertisement node STARBUCKS® N9 may be an advertisement node COFFEE BEAN® N10 and the advertisement node MCDONALD'S® N11.

When an advertisement node corresponding to a keyword is not a lowest node, the advertisement node of the sponsor from the same line of business may indicate a lowest advertisement node where a sponsor is registered from among children nodes. For example, an advertisement node of a sponsor from the same line of business of the advertisement node 'fast food' N7 may be the advertisement node MCDONALD'S® N11 and the advertisement node BURGER KING® N12.

When an advertisement node corresponding to a keyword is a lowest node, the advertisement node of the sponsor from a different line of business may indicate an advertisement node where a sponsor is registered from among children nodes of sibling nodes of a parent node. For example, an advertisement node of a sponsor from a different line of business of an advertisement node 'Organic food restaurant 1' N14 may be the advertisement node MCDONALD'S® N11 and the advertisement node BURGER KING® N12.

When an advertisement node corresponding to a keyword is not a lowest node, the advertisement node of the sponsor from the different line of business may indicate a lowest advertisement node where a sponsor is registered from among children nodes of sibling nodes. For example, an advertisement node of a sponsor from a different line of business of an advertisement node 'Traditional tea' N5 may be the advertisement node COFFEE BEAN® N10 and the advertisement node MCDONALD'S® N11.

FIG. 5 illustrates an example of a data structure of an advertisement node. Referring to FIG. 5, the advertisement node may include, for example, a trade name, node identification information, upper node information, lower node information, reverse node information, location information, keyword information, sponsor information, user preference information, new product information, coupon information, advertisement animation information, and the like.

The upper node information may indicate a node in an upper layer of the advertisement node. The lower node information may indicate a node in a lower layer of the advertisement node. The reverse node information may indicate a node which is different in concept from the advertisement node. The location information may indicate a location of an advertisement object. The keyword information may indicate a word or a sentence associated with the advertisement object to sort the advertisement object. The sponsor information may indicate whether an advertisement is requested. The user preference information may indicate a whether a user prefers the advertisement object. Information may be output when an event occurs, for example, the new product information, the coupon information, and/or the advertisement animation information may be outputted when an event occurs.

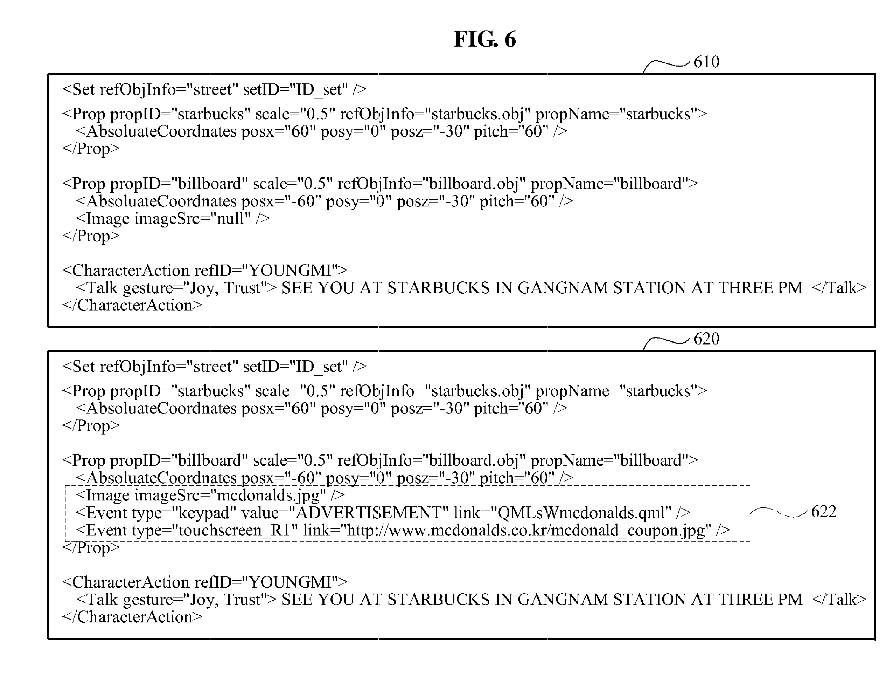

FIG. 6 illustrates an example of animation scripts before and after an advertisement is inserted. Referring to FIG. 6, an advertising apparatus may receive an animation script 610 including a text, for example, "see you at STARBUCKS® in the Gangnam station at three pm," and extract a keyword such as STARBUCKS® from the animation script 610. The advertising apparatus may extract a positive affect from the text of "see you at STARBUCKS® in the Gangnam station at three pm." The advertising apparatus may extract a location of 'Gangnam' from the text. Referring again to FIG. 4, if a sponsor corresponding to the keyword STARBUCKS® does not exist, the advertising apparatus may select the advertisement node 'MCDONALD'S® N11 which is an advertisement node of a sponsor from a different line of business. Also, the advertising apparatus may generate an animation script 620 where an advertisement 622 of MCDONALD'S® may be inserted.

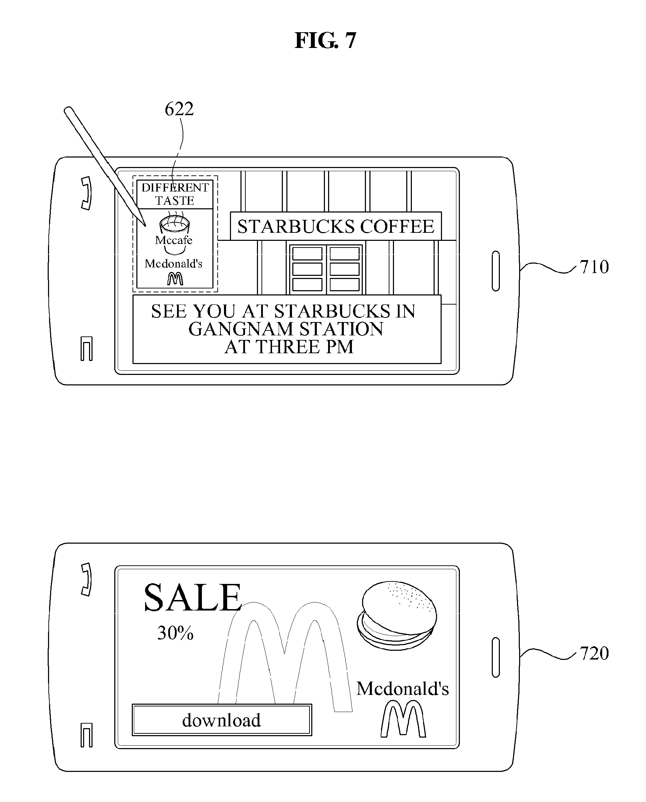

FIG. 7 illustrates an example of a display 710 displaying a text message and a sponsor-based advertisement. The display 710 is also displaying a coupon 720. The coupon 720 is an example of an event of an advertisement. The animation script 620, where the advertisement 622 of MCDONALD'S® is inserted, is replayed in the screen 710 of FIG. 7. For example, when the advertisement 622 of MCDONALD'S® is selected through a touch screen, an event which is set for the advertisement 622 of MCDONALD'S® may be inserted. When the event is a coupon, the coupon 720 may be outputted.

The advertising apparatus and method described herein may extract an affect from received data, select an advertisement of a corresponding sponsor when the affect is positive, and select an advertisement of a sponsor from a different line of business when the affect is negative. By using a positive and/or negative affect, the advertising apparatus and method may efficiently provide an advertisement.

The methods described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. Examples of computer-readable media may include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An advertising apparatus, comprising:
a keyword extraction unit (141) to extract a keyword from received data;
an affect extraction unit (143) to extract an affect from the received data;
an advertisement selection unit (144) to select an advertisement (622) to be inserted based on the affect of the received data and whether a sponsor corresponding to the keyword exists; and
an interface unit (130) to output the advertisement (622) to a user.

2. The advertising apparatus of claim 1, wherein the affect extraction unit (143) extracts a positive affect, a negative affect, or a neutral affect from the content of the received data.

3. The advertising apparatus of claim 1, further comprising:
a script generation unit (145) to insert the selected advertisement (622) in the received data and to generate a script based on the advertisement (622) and the received data; and
a script analysis unit (146) to analyze the generated script.

4. The advertising apparatus of claim 1, further comprising:
a location extraction unit (142) to extract at least one of a location of a transmitter of the received data, a location of the advertising apparatus, and a location included in content of the received data,
wherein the advertisement selection unit (144) selects the advertisement (622) to be inserted from an advertisement node database based on the at least one location, the affect of the received data, and whether the sponsor corresponding to the keyword exists.

5. The advertising apparatus of claim 1, further comprising:
an advertisement node database storing one or more advertisement nodes, each advertisement node including at least one of a trade name, node identification information, upper node information indicating a node in a upper layer of the advertisement node, lower node information indicating a node in a lower layer of the advertisement node, keyword information used to sort an advertisement object, and sponsor information indicating whether an advertisement (622) is requested,
wherein the advertisement selection unit (144) searches the advertisement node database and selects the advertisement (622) to be inserted.

6. The advertising apparatus of claim 5, wherein the advertisement node includes at least one of reverse node information indicating a node which is different in concept from the advertisement node, location information indicating a location of the advertisement object, user preference information indicating a user's preference for the advertisement object, new product information of the advertisement object, coupon information of the advertisement object, and advertisement animation information of the advertisement object.

7. The advertising apparatus of claim 5, wherein, when the affect is a positive affect or a neutral affect, and a sponsor of an advertisement node corresponding to the keyword exists, the advertisement selection unit (144) selects an advertisement (622) of the sponsor corresponding to the keyword as the advertisement (622) to be inserted, and/or, wherein, when the affect is a positive affect or a neutral affect, a sponsor of an advertisement node corresponding to the keyword does not exist, and a sponsor from the same line of business of the advertisement node exists, the advertisement selection unit (144) selects an advertisement (622) of the sponsor from the same line of business as the advertisement (622) to be inserted, and/or, wherein, when the affect is a positive affect or a neutral affect, a sponsor of an advertisement node corresponding to the keyword does not exist, and a sponsor from the same line of business of the advertisement node does not exist, the advertisement selection unit (144) selects an advertisement (622) of a sponsor from a different line of business as the advertisement (622) to be inserted, and/or, wherein, when the affect is a negative affect, an advertisement node corresponding to the keyword is a lowest node, and a sponsor from the same line of business of the advertisement node exists, the advertisement selection unit (144) selects an advertisement (622) of the sponsor from the same line of business as the advertisement (622) to be inserted, and/or, wherein, when the affect is a negative affect, an advertisement node corresponding to the keyword is a lowest node, and a sponsor from the same line of business of the advertisement node does not exist, the advertisement selection unit (144) selects an advertisement (622) of a sponsor from a different line of business or an advertisement (622) of a sponsor of a business associated with a reverse node of the advertisement node, as the advertisement (622) to be inserted, and/or, wherein, when the affect is a negative affect, and an advertisement node corresponding to the keyword is different from a lowest node, the advertisement selection unit (144) selects an advertisement (622) of a sponsor in a different line of business or an advertisement (622) of a sponsor of a business associated with a reverse node of the advertisement node, as the advertisement (622)to be inserted.

8. An advertising method, comprising:
extracting a keyword from received data;
extracting an affect from the received data;
selecting an advertisement (622) to be inserted based on the affect of the received data and whether a sponsor corresponding to the keyword exists; and
outputting the advertisement (622) and the received data to a user.

9. The advertising method of claim 8, wherein the extracting of the affect extracts a positive affect, a negative affect, or a neutral affect based on content of the received data.

10. The advertising method of claim 8, further comprising:
inserting the selected advertisement (622) in the received data and generating a script based on the received data and the advertisement (622); and
analyzing and replaying the generated script.

11. The advertising method of claim 8, further comprising:
extracting at least one of a location of a transmitter of the received data, a location of an advertising apparatus, and a location included in content of the received data,
wherein the selecting selects the advertisement (622) to be inserted from an advertisement node database based on the at least one location, the affect of the received data, and whether the sponsor corresponding to the keyword exists.

12. The advertising method of claim 8, wherein the selecting searches an advertisement node database to select the advertisement (622) to be inserted, the advertisement node database including one or more advertisement nodes that each include at least one of a trade name, node identification information, upper node information indicating a node in a upper layer of the advertisement node, lower node information indicating a node in a lower layer of the advertisement node, keyword information used to sort advertisement object, and sponsor information indicating whether an advertisement (622) is requested.

13. The advertising method of claim 12, wherein the advertisement node includes at least one of reverse node information indicating a node which is different in concept from the advertisement node, location information indicating a location of the advertisement object, user preference information indicating a user's preference for the advertisement object, new product information of the advertisement object, coupon information of the advertisement object, and advertisement animation information of the advertisement object.

14. The advertising method of claim 12, wherein, when the affect is a positive affect or a neutral affect, and a sponsor of an advertisement node corresponding to the keyword exists, the selecting selects an advertisement (622) of a sponsor corresponding to the keyword as the advertisement (622) to be inserted.

15. The advertising method of claim 12, wherein, when the affect is a positive affect or a neutral affect, a sponsor of an advertisement node corresponding to the keyword does not exist, and a sponsor from the same line of business of the advertisement node exists, the selecting selects an advertisement (622) of the sponsor from the same line of business as the advertisement (622) to be inserted, and/or, wherein, when the affect is a positive affect or a neutral affect, a sponsor of an advertisement node corresponding to the keyword does not exist, and a sponsor from the same line of business of the advertisement node does not exist, the selecting selects an advertisement (622) of a sponsor from a different line of business as the advertisement (622) to be inserted, and/or, wherein, when the affect is a negative affect, an advertisement node corresponding to the keyword is a lowest node, and a sponsor from the same line of business of the advertisement node exists, the selecting selects an advertisement (622) of the sponsor from the same line of business as the advertisement (622) to be inserted, and/or, wherein, when the affect is a negative affect, an advertisement node corresponding to the keyword is a lowest node, and a sponsor from the same line of business of the advertisement node does not exist, the selecting selects an advertisement (622) of a sponsor from a different line of business or an advertisement (622) of a sponsor of a business associated with a reverse node of the advertisement node, as the advertisement (622) to be inserted, and/or, wherein, when the affect is a negative affect, and an advertisement node corresponding to the keyword is different from a lowest node, the selecting selects an advertisement (622) of a sponsor from a different line of business or an advertisement (622) of a sponsor of a business associated with a reverse node of the advertisement node, as the advertisement (622) to be inserted.
